# FASCICULE DE BREVET EUROPEEN

(11) **EP 2 677 633 B1**
(45) Date de publication et mention de la délivrance du brevet: **29.04.2020**
(21) Numéro de dépôt: 13170454.6
(22) Date de dépôt: 04.06.2013
(51) Int. Cl.: H02K 3/34, H02K 3/52, H02K 9/22

(54) **Isolant de bobine composé et élément de machine électrique associé**
Zusammengesetzte Spulenisolierung und entsprechendes elektrisches Maschinenelement
Assembled coil insulator and associated electric machine element

(30) Priorité: 20.06.2012 FR 1255768
(43) Date de publication de la demande: 25.12.2013
(73) Titulaire: VALEO EQUIPEMENTS ELECTRIQUES MOTEUR, 94046 Créteil (FR)
(72) Inventeur: Jugovic, Svetislav, 91200 Athis-Mons (FR); El Baraka, Khadija, 77700 Serris (FR)
(74) Mandataire: Duprez, Richard

(56) Documents cités:
- EP-A1- 2 083 505
- EP-A2- 1 096 642
- WO-A1-2008/132970
- WO-A1-2011/119574
- JP-A- 2000 078 778
- US-A1- 2012 025 661
- US-B1- 6 509 665

## Description

### DOMAINE TECHNIQUE DE L'INVENTION

L'invention concerne un isolant de bobine mixte composé de deux parties ayant des propriétés de conduction de chaleur différentes, ainsi qu'un élément de machine électrique consistant en un rotor ou un stator comportant des dents recouvertes dudit isolant de bobine.

L'invention se rapporte au domaine des machines électriques telles que les moteurs, les alternateurs, ou les alterno-démarreurs.

L'invention trouve une application particulièrement avantageuse avec les alternateurs utilisés dans des systèmes dits "range-extender" destinés à augmenter l'autonomie des véhicules électriques. Ces systèmes comportent à cet effet un moteur thermique de faible puissance entraînant mécaniquement en rotation l'alternateur destiné à fournir, quand cela est nécessaire, de l'énergie électrique à des batteries d'alimentation d'un moteur électrique de traction du véhicule.

### ETAT DE LA TECHNIQUE

On connaît des machines électriques comportant un stator et un rotor solidaire d'un arbre. Le rotor pourra être solidaire d'un arbre menant et/ou menée et pourra appartenir à une machine électrique tournante sous la forme d'un alternateur comme décrit dans le document EP 0 803 962 ou d'un moteur électrique comme décrit dans le document EP 0 831 580.

La machine électrique comporte un boîtier portant le stator. Ce boîtier est configuré pour porter à rotation l'arbre par exemple par l'intermédiaire de roulements, tel que des roulements à billes et/ou à aiguilles. Le rotor pourra comporter un corps réalisé en tôle feuilletée, qui comporte des logements. Des aimants permanents sont positionnés à l'intérieur d'au moins certains de ces logements comme visible par exemple dans les figures 1 et 2 du document EP0803962.

Comme décrit dans le document FR2890798 auquel on se reportera pour plus de précisions, la machine comporte un rotor à griffes et un corps de stator sous la forme d'un paquet de tôles doté de dents pour le montage de bobines appartenant au bobinage du stator. Le corps du stator comporte des encoches ouvertes vers l'intérieur délimitées chacune par deux dents consécutives. Ces dents sont à bords parallèles, une bande de matière, appelée culasse existant entre le fond des encoches et la périphérie externe du corps. On monte sur ces dents des bobines préformées réalisées à partir d'un fil enroulé sur plusieurs tours. Les fils consistent par exemple en un fil de cuivre revêtu d'émail.

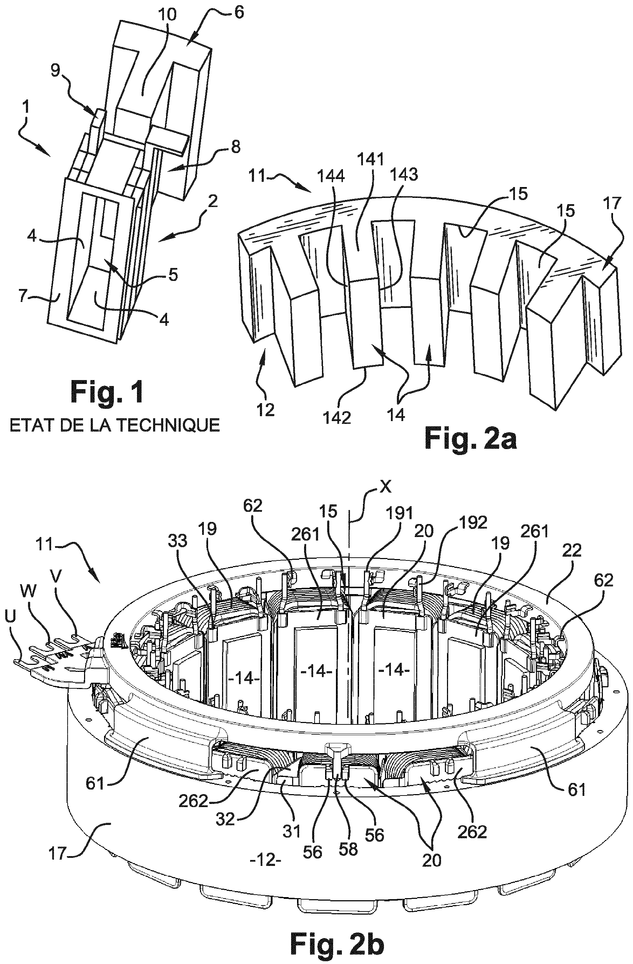

Comme cela est visible sur la figure 1, chaque bobine est montée autour d'un isolant d'encoche 1 électriquement isolant ayant un corps 2 comportant des parois 4 délimitant un cadre 5 de forme globalement rectangulaire. Le corps 2 de l'isolant comporte en outre un rebord avant 7 et un rebord arrière 8 définissant, avec les parois 4 du cadre 5, une gorge de montage d'une bobine 9. Le rebord arrière 8 est destiné à être positionné à proximité de la culasse 6 tandis que le rebord avant 7 est situé du côté intérieur de la machine. L'ensemble est destiné à être enfilé autour de la dent 10.

Dans une forme de réalisation, deux bobines sont implantées dans une même encoche, chaque bobine étant enroulée autour de l'une des dents délimitant l'encoche par l'intermédiaire d'un isolant de bobine. Les bobines sont interconnectées entre elles, par exemple par soudure ou à l'aide d'un connecteur pour former une phase de la machine qui pourra être du type polyphasée.

US 6 509 665 B1 divulgue un isolant de bobine comprenant une fenêtre et de la résine dans la fenêtre.

### OBJET DE L'INVENTION

L'invention a pour but d'améliorer la propagation de la chaleur entre l'isolant de bobine et la dent du stator ou du rotor selon les cas.

A cet effet l'invention concerne un isolant de bobine destiné à être positionné autour d'une dent d'un stator ou d'un rotor d'une machine électrique avec le caractéristiques de la revendication 1.

Selon une réalisation, le corps comporte en outre un rebord avant et un rebord arrière définissant une gorge de montage pour l'enroulement d'une bobine.

Selon une réalisation, la surépaisseur reliant les bras entre eux est implantée du côté intérieur de la machine électrique.

Selon une réalisation, l'isolant de bobine comporte en outre un système d'accrochage de l'isolant de bobine sur la dent du stator ou du rotor.

Selon une réalisation, le système d'accrochage est formé par au moins un ergot d'accrochage issu d'une arête d'un rebord et au moins une rainure de faible profondeur, appelée "piquage", ménagée sur une face latérale de la dent pour un encliquetage de l'ergot d'accrochage.

Selon une réalisation, l'isolant de bobine comporte deux ensembles de deux ergots d'accrochage et deux rainures réalisées du côté d'une extrémité libre de la dent destinées à recevoir chacune deux ergots d'accrochage d'un ensemble.

Selon une réalisation, l'isolant de bobine comporte en outre des rainures ménagées dans au moins un des rebords du côté de la gorge pour le passage du vernis au niveau de la bobine.

Selon une réalisation, l'isolant de bobine comporte deux rainures ménagées dans un des rebords du côté de la gorge et une autre rainure ménagée dans l'autre rebord.

Selon une réalisation, l'isolant de bobine comporte au moins une ailette pliable par rapport au corps apte à assurer une isolation électrique entre deux bobines montées sur deux dents adjacentes, cette ailette étant située dans le prolongement d'un des rebords.

Selon une réalisation, l'isolant de bobine comporte en outre un talon situé dans le prolongement du rebord arrière destiné à être plaqué contre un fond d'une encoche du stator ou du rotor.

Selon une réalisation, l'isolant de bobine comporte des empreintes ménagées dans des portions de forme arrondie au niveau des angles du cadre pour faciliter un enroulement d'un fil de la bobine.

Selon une réalisation, l'isolant de bobine comporte des protubérances définissant un passage pour un pion d'indexage d'un connecteur externe.

L'invention concerne en outre un stator ou un rotor de machine électrique comportant des dents issues d'une culasse autour desquelles est positionné un isolant de bobine selon l'invention portant une bobine.

### BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention.
La figure 1, déjà décrite, montre un isolant de bobine selon l'état de la technique destiné à être monté sur une dent d'un stator;
Les figures 2a et 2b montrent respectivement une représentation schématique d'un stator nu et d'un stator selon l'invention comportant des bobines montées sur des dents par l'intermédiaire d'un isolant de bobine selon l'invention ;
La figure 3a montre une vue en perspective de l'avant du corps de l'isolant de bobine selon l'invention;
La figure 3b montre une vue en perspective de l'arrière du corps et de l'élément en matériau souple formant l'isolant de bobine selon l'invention;
La figure 3c montre une vue de dos de l'isolant de bobine selon l'invention faisant apparaître l'élément en matériau souple inséré dans les fentes du corps de l'isolant de bobine;
La figure 3d montre une vue en coupe transversale de l'isolant de bobine selon l'invention accroché sur une dent d'un stator représenté en traits discontinus;
Les figures 4a et 4b montrent des vues en perspective de l'isolant de bobine selon l'invention comportant un premier type de système d'encliquetage de l'ailette sur le corps de l'isolant de bobine;
La figure 4c montre une vue détaillée d'une patte portée par un rebord du corps de l'isolant de bobine selon l'invention;
Les figures 5a et 5b montrent des vues en perspective de l'isolant de bobine selon l'invention comportant une variante du système d'encliquetage de l'ailette sur le corps de l'isolant de bobine;
La figure 5c montre une vue en coupe détaillée de la liaison entre un bord de l'ailette et un rebord de l'isolant de bobine suivant le mode de réalisation des figures 5a et 5b;
La figure 6 montre un autre mode de réalisation de l'isolant de bobine selon l'invention suivant lequel la zone de pliage de l'ailette assure une fonction de guidage des extrémités du fil de bobine.

### DESCRIPTION D'EXEMPLES DE REALISATION DE L'INVENTION

Les figures 2a et 2b montrent un stator 11 d'axe X ayant un corps 12 comportant des dents 14 réparties régulièrement sur la périphérie interne ainsi que des encoches 15 ouvertes vers l'intérieur, deux encoches 15 consécutives étant séparées par une dent 14. Ces dents 14 sont à bords 141-144 parallèles deux à deux, une bande de matière, correspondant à la culasse 17 existant entre le fond des encoches 15 et la périphérie externe du corps 12. Le corps 12 est formé par un empilement de tôles réalisées en matière ferromagnétique s'étendant dans un plan radial perpendiculaire à l'axe X. Le paquet de tôles est maintenu au moyen de rivets (non représentés) traversant axialement de part en part l'empilement des tôles.

Comme cela est visible sur la figure 2b, on monte sur les dents 14 du stator des bobines 19 préformées. Ces bobines 19 sont réalisées à partir d'un fil enroulé sur plusieurs tours. Les fils consistent en un fil électriquement conducteur, par exemple en un fil de cuivre et/ou d'aluminium, revêtu d'un isolant électrique, tel que de l'émail. Les fils peuvent être de section circulaire, rectangulaire ou en forme de méplat.

Dans une forme de réalisation, deux bobines 19 sont implantées dans une même encoche 15, chaque bobine 19 étant enroulée autour de l'une des dents 14 délimitant l'encoche par l'intermédiaire d'un isolant de bobine 20. Les bobines 19 sont interconnectées entre elles, par exemple par soudure ou à l'aide d'un connecteur 22 pour former une phase U, V, W de la machine qui pourra être du type polyphasé.

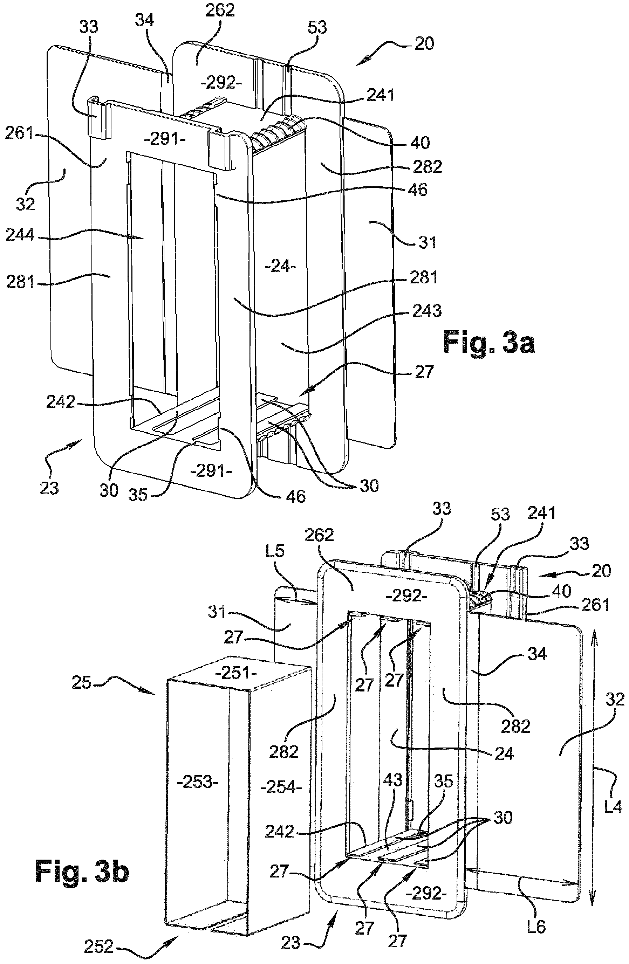

L'isolant de bobine 20 est un isolant électrique réalisé dans ce mode de réalisation en matière électriquement isolante et moulable. Comme bien visible sur les figures 3a et 3b, l'isolant 20 de bobine a un corps 23 comportant un cadre 24 destiné à être positionné autour d'une dent 14 afin d'isoler électriquement la bobine 19 par rapport à la dent 14 métallique. Ce cadre 24 comporte une paroi supérieure 241 et une paroi inférieure 242 sensiblement perpendiculaire à l'axe X. Le cadre 24 comporte également deux fenêtres latérales 243, 244 qui s'étendent suivant des plans perpendiculaires aux parois supérieure 241 et inférieure 242. Le corps 23 de l'isolant comporte en outre un rebord avant 261 et un rebord arrière 262 définissant une gorge de montage de la bobine 19. Le rebord arrière 262 est destiné à être positionné à proximité de la culasse 17; tandis que le rebord avant 261 est situé du côté de l'extrémité libre d'une dent 14, c'est-à-dire du côté de la périphérie externe du rotor (non représenté). Le corps 23 est réalisé ici en matière électriquement isolante rigide par exemple en matière plastique telle que du PA 6.6, qui pourra être renforcé par des fibres, telles que des fibres de verre. Les parois 241 et 242 forment une entretoise entre les rebords 261, 262 et pourront avoir la même épaisseur que les rebords 2661, 262. En variante les parois 241, 242 pourront être plus épaisses que les rebords 261, 262.

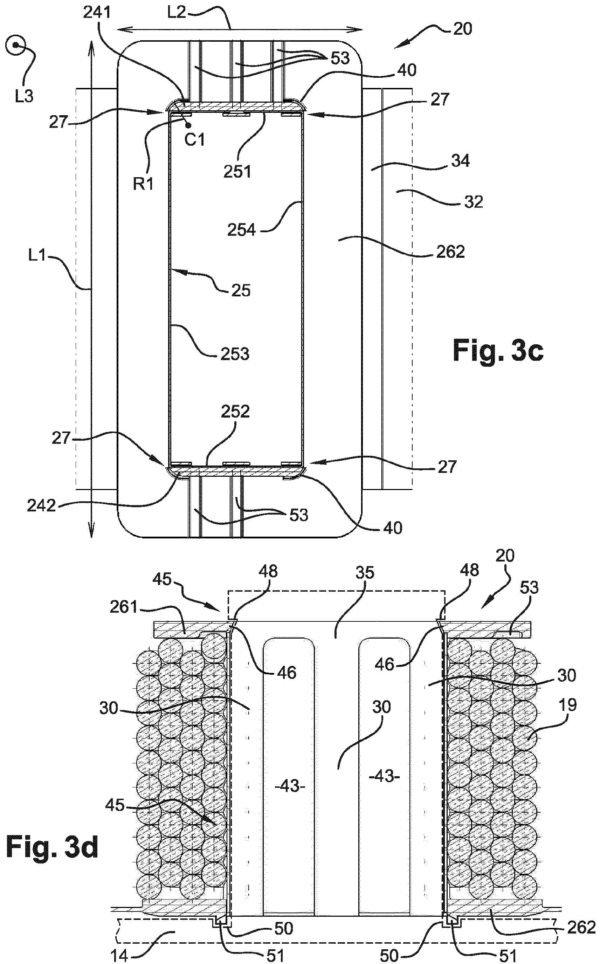

Comme visible, sur les figures 3b et 3c, l'isolant 20 de bobine comporte en outre un élément 25 en matériau souple moins épais et meilleur conducteur de chaleur que le matériau du corps 23. L'élément 25 présente de préférence la forme d'un papier réalisé en matériau de type "Nomex", marque déposée. L'élément 25 réalisé en papier comporte des parois latérales 251-254 parallèles deux à deux. La forme de l'élément 25 est obtenue par pliage d'une bande de papier sensiblement rectangulaire.

Le corps 23 comporte des fentes 27 pour l'insertion et le maintien de l'élément 25 en matériau souple à l'intérieur du cadre 24. A cet effet, l'isolant 20 comporte sur les faces internes des parois supérieure 241 et inférieure 242 du cadre 24 des bras 30 reliées à leur base par une surépaisseur 35 ancrée dans le cadre 24. Ces bras 30 sont en surélévation par rapport aux faces internes des parois 241, 242 de manière à former les fentes 27 d'insertion de l'élément 25. La surépaisseur 35 reliant les bras 30 entre eux est implantée du côté intérieur en vis à vis du rotor de la machine électrique pour éviter que le vernis d'imprégnation coule à l'intérieur de la machine électrique au niveau de l'entrefer entre le rotor et le stator de la machine électrique. Ces bras 30 s'étendent sensiblement perpendiculairement au rebord avant 261 et arrière 262. En l'occurrence, l'isolant 20 de bobine comporte trois bras 30 portés par chaque paroi 241, 242.

Les parois supérieure 251 et inférieure 252 de l'élément 25 peuvent ainsi être insérées à l'intérieur des fentes 27 de manière à être maintenues coincées entre les bras 30 et les faces internes des parois supérieure 241 et inférieure 242 du cadre 24. Après que l'élément 25 a été inséré à l'intérieur des fentes 27, les deux parois latérales 253, 254 de l'élément 25 se retrouvent alors positionnées en regard des deux fenêtres latérales 243, 244. Les parois supérieure 241 et inférieure 242 du cadre 24 réalisées dans un matériau épais et rigide permettent ainsi de soutenir efficacement la bobine sans blesser le fil lors de son enroulement autour du cadre 24. Les parois latérales 253, 254 de l'élément 25 bonne conductrices de chaleur sont suffisamment fines pour permettre un transfert de chaleur efficace entre la bobine 19 et la dent 14.

Pour obtenir les bras 30, des rainures borgnes 43 sont ménagées dans les faces internes des parois supérieure 241 et inférieure 242 du cadre 24. Ces rainures 43 s'étendent sensiblement perpendiculairement aux rebords avant 261 et arrière 262. Ces rainures 43 sont fermées, c'est-à-dire non débouchantes du côté du rebord avant 261. Ces rainures 43 délimitent des nervures qui sont fendues suivant leur longueur pour obtenir les bras 30. Ces bras 30 sont reliés à leur base par la partie non débouchante des rainures 43 formant la surépaisseur 35. Lorsque l'élément 25 en matériau souple est positionné à l'intérieur du cadre 24, les rainures 43 permettre le passage d'un vernis d'imprégnation entre l'isolant 20 et la dent 14 pour la fixation de ces deux éléments 14 et 20 entre eux.

De manière optionnelle, comme cela est visible sur les figures 3a, 3b et 3c, le cadre 24 comporte des portions 40 de forme arrondies au niveau des angles entre les parois du cadre 24 présentant en surface des empreintes pour faciliter l'enroulement du fil de la bobine 19. Dans une réalisation, ces empreintes, qui coopèrent chacune avec un enroulement du fil, présentent une direction d'extension légèrement inclinée par rapport aux rebords avant 261 et arrière 262 suivant la forme de l'enroulement afin d'optimiser le remplissage des encoches 15 du stator 11.

Par ailleurs, chaque rebord 261, 262 comporte deux bordures longitudinales référencées 281 pour le rebord avant 261 et 282 pour le rebord arrière 262. Ces bordures longitudinales 281 et 282 forment avec les parois latérales 243 et 244 la partie de la gorge recevant les côtés d'un bobinage. Chaque rebord 261, 262 comporte également deux bordures transversales référencées 291 pour le rebord avant 261 et 292 pour le rebord arrière 262 reliant entre elles les bordures longitudinales 281, 282 de chaque rebord 261, 262. Ces bordures transversales 291, 292 forment avec les parois supérieure 241 et inférieure 242 la partie de la gorge recevant les extrémités des bobinages dépassant axialement de part et d'autre d'une dent 14 appelées chignons.

Une des bordures longitudinales 282 du rebord arrière 262 est prolongée par un talon 31; tandis que l'autre bordure longitudinale 282 du rebord arrière 262 est prolongée par une ailette 32 via une zone 34 de raccordement entre l'ailette 32 et le rebord arrière 262. Cette zone 34 de raccordement présente une épaisseur inférieure à l'épaisseur du rebord arrière 262 de manière à constituer une zone de pliage. L'ailette 32 est ainsi pliable en direction du corps 23 de l'isolant de bobine suivant la zone 34 de pliage qui s'étend longitudinalement perpendiculairement aux parois supérieure 241 et inférieure 242. Une fois pliée, l'ailette 32 constitue un mur électriquement isolant entre deux bobines 19 successives, tandis que le talon 31 permet de diminuer les chutes de tension. Le talon 31 est moins épais et moins large que l'ailette 32 comme visibles dans les figures 3a, 3b, 4a et5a.

Dans le mode de réalisation des figures 2b, 3a et 3b, l'ailette 32 est destinée à être pliée et laissée libre. Dans ce cas, lorsque les isolants 20 de bobine sont montés sur les dents 14, l'ailette 32 d'un isolant 20 donné prend appui contre un rebord avant 261 d'un isolant de bobine 20 adjacent.

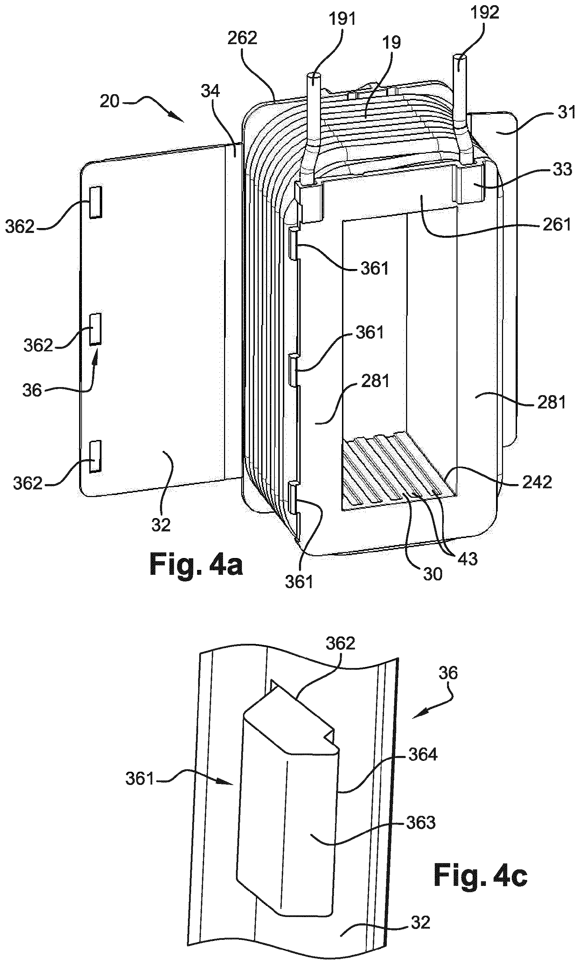

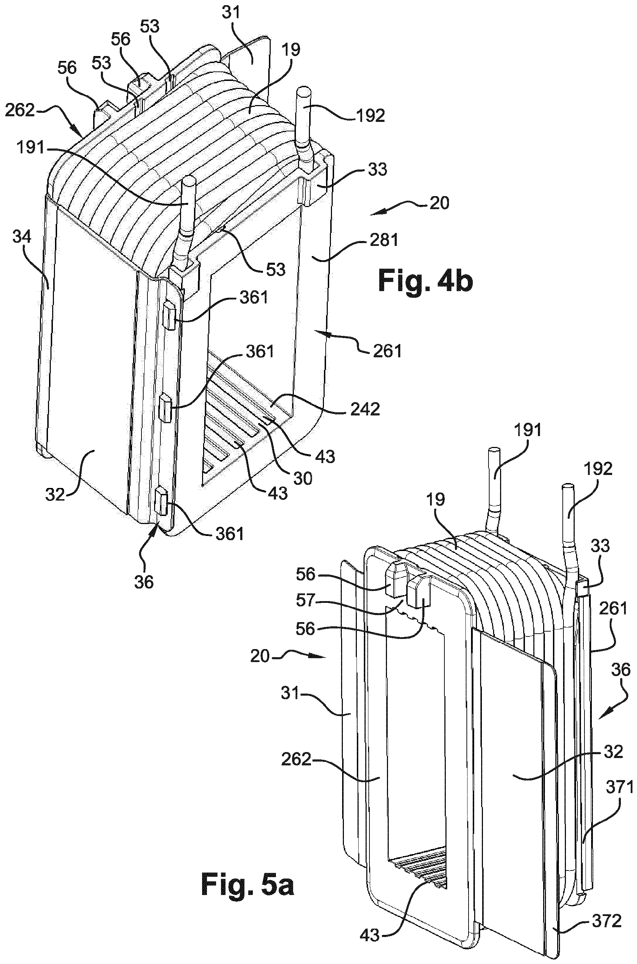

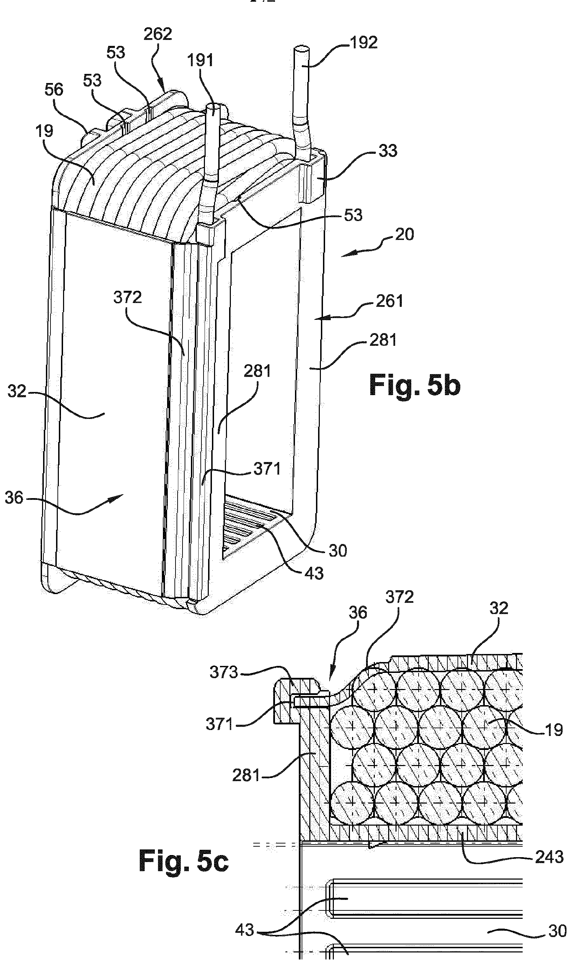

Dans les modes de réalisation des figures 4 et 5, l'ailette 32 est fixée au moyen d'un système d'encliquetage 36 avec la bordure longitudinale 281 du rebord avant 261 située du côté de l'ailette 32. Comme montré sur les figures 4a et 4b, le système d'encliquetage 36 est formé par des pattes 361 portées par la bordure longitudinale 281 du rebord avant 261. Ces pattes 361 sont destinées à coopérer par encliquetage avec des fenêtres 362 ménagées dans la paroi de l'ailette 32. Comme visible sur la figure 4c, ces pattes 361 présentent chacune la forme d'un crochet ayant un côté 363 en forme de rampe triangulaire terminée par un rebord 364 permettant de retenir l'ailette 32 après que la patte 361 a traversé une fenêtre 362. Comme dans la zone de pliage, le bord de l'ailette 32 situé du côté des fenêtres 362 est également aminci afin de permettre un plaquage optimal de l'ailette 32 contre le côté de la bobine 19 (cf. figure 4b). Inversement, il serait possible de prévoir des fenêtres 362 dans la bordure longitudinale 281 du rebord avant 261 tandis que les pattes 361 sont portées par un bord de l'ailette 32.

Alternativement, comme montré sur les figures 5a à 5c, le système d'encliquetage 36 est formé par une encoche 371 ménagée dans l'épaisseur du rebord avant 261. Le bord libre de l'ailette 32 forme alors une languette 372 destinée à s'insérer à l'intérieur de l'encoche 371 pour maintenir l'ailette 32 rabattue contre le corps 23 de l'isolant 20. A cet effet, comme montré sur la figure 5c, la partie de l'ailette 32 formant la languette 372 présente une épaisseur amincie afin de faciliter le positionnement de la languette 372 à l'intérieure de l'encoche 371 et de garantir un bon plaquage de l'ailette 32 contre un côté latéral de la bobine 19. L'encoche 371 est réalisée dans une extrémité de la bordure longitudinale 281 du rebord avant 261 présentant une surépaisseur 373. Cette bordure longitudinale 281 présente ainsi un bord en forme en U ouvert du côté du rebord arrière 262 portant l'ailette 32.

Comme cela est visible sur la figure 2b, le talon 31 est destiné à être plaqué contre un fond d'une encoche 15 du stator 11 constitué par la périphérie interne de la culasse 17 qui s'étend entre deux dents 14 successives. Ce talon 31 a pour fonction d'isoler efficacement les bobines 19 de la culasse 17, ce qui permet de limiter la perte de tension des bobines 19. A cet effet, le talon 31 présente une longueur correspondant à l'épaisseur de la culasse 17 et une largeur correspondant à la distance entre deux dents 14 adjacentes successives.

De préférence, comme cela est représenté sur les figures 2b, 3a, 3b, 4a, 4b, 5a, et 5b, les bordures longitudinales 281 du rebord avant 261 sont configurées à une de leurs extrémités 33 pour servir de guide fil pour chaque sortie 191, 192 de la bobine 19. A cet effet, les bordures longitudinales 281 présentent à une extrémité 33 la forme d'une cuvette recevant une extrémité du fil. Le fil de la bobine 19 pourra être maintenu en position pour le soudage d'un connecteur 22 en prenant appui sur les faces latérales de la cuvette.

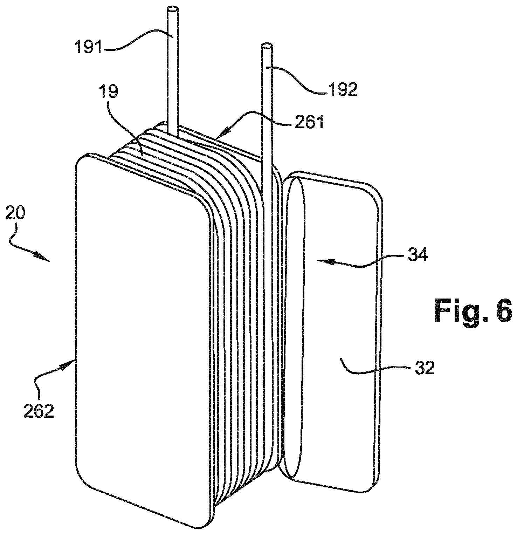

Alternativement, dans le mode de réalisation montré sur la figure 6, l'ailette 32 est issue du rebord avant 261, la zone 34 de pliage de l'ailette étant alors configurée pour le guidage d'une extrémité 191, 192 du fil de la bobine 19. Le fil est alors guidé sur toute sa longueur le long de la zone de pliage, ce qui facilite son maintien lors des opérations de soudage. A cet effet, un creux de forme complémentaire de celle du fil de la bobine 19 est ménagé dans la zone 34 de pliage d'épaisseur réduite. En variante le rebord avant pourra être équipé d'une autre ailette 32 à zone de pliage 34 pour guidage de l'autre extrémité 192, 191 du fil de la bobine 19. Grâce à la ou aux ailettes 32 de ce mode de réalisation on obtient une localisation plus robuste et sous contrôle de la ou des extrémités 191, 192 ce qui facilite les opérations de soudage. Cela facilite également l'assemblage de la bobine avec l'isolant de bobine. Cela permet également une réduction de la largeur de l'ailette 32. Dans ce mode de réalisation le corps de l'isolant comporte des fentes et des bras en surélévation comme dans les figures précédentes pour l'insertion et le maintien de l'élément en matériau souple. La différence porte sur la position de l'ailette 32.

Pour garantir un maintien efficace de la bobine 19 sur la dent 14 lors de l'injection d'un vernis d'imprégnation à l'intérieur des rainures 43, un système d'accrochage 45 montré sur la figure 3d assure une fixation de l'isolant 20 de bobine sur la dent 14. Ce système d'accrochage 45 est formé par des ergots 46 d'accrochage et des rainures 48 de faible profondeur appelées "piquage" ménagées dans la dent 14 pour l'encliquetage des ergots 45. Plus précisément, ces ergots 46, ici au nombre de quatre, sont portés par des arêtes du rebord avant 261 tournées vers la dent 14. En l'occurrence, les arêtes du rebord avant 261 perpendiculaires aux parois 241 et 242 du cadre 24 portent chacune deux ergots 46 d'accrochage (cf. figures 3a, 3b). Chaque ensemble de deux ergots 46 est destiné à coopérer par encliquetage avec une rainure 48 réalisée dans la tête de la dent 14. Les dents 14 comporte ainsi deux rainures 48 réalisées dans les extrémités de deux faces latérales 143, 144 de la dent 14 parallèles l'une de l'autre reliant les faces supérieure 141 et inférieure 142 de la dent 14. Ces rainures 48 s'étendent suivant une direction d'extension axiale du stator 11.

Les ergots 46 ainsi que les rainures 48 présentent des sections triangulaires de forme complémentaire. On note que l'épaisseur de chaque ergot 46 ainsi que la profondeur de la rainure 48 correspondante a tendance à diminuer lorsqu'on se déplace de la tête de la dent 14 vers la culasse 17. Une fois que les ergots 46 coopèrent avec les rainures 48, un côté de chaque ergot 46 en appui sur un côté de la rainure 48 correspondante a alors tendance à retenir en translation l'isolant 20 sur la dent 14. Cela permet un bon maintien de l'isolant 20 lors des phases de déplacement du stator 11 pour permettre une injection de vernis à l'intérieur des rainures borgnes 43.

En variante ou en complément, les dents 14 présentent en outre des aspérités (non représentées) pour l'accrochage de l'isolant 20.

Pour assurer le maintien en position de l'isolant 20 lors de l'opération de soudage des extrémités 191, 192 des fils des bobines 19 au connecteur 22, le corps 12 du stator comporte également de préférence deux fentes 50 visibles sur la figure 3d situées au niveau du pied de chaque dent 14, c'est-à-dire au niveau de la jonction entre la dent 14 et la culasse 17. Ces fentes 50 sont situées de part et d'autre des faces latérales de la dent 14 pour permettre la pénétration de saillies 51 de l'isolant 20 de bobine. Les ergots 46 sont positionnés de manière à garantir un engagement des saillies 51 à l'intérieur des fentes 50 lorsque les ergots 46 coopèrent avec les rainures 48.

En outre, pour faciliter l'imprégnation des fils des bobines 19, l'isolant 20 présente des rainures 53 ménagées dans les bordures transversales 291, 292 des rebords avant 261 et arrière 262 pour le passage du vernis au niveau de la bobine 19 (cf. figures 3a, 3b, 3c, 3d, 4a, 4b, 5b). Ces rainures 53 sont ménagées du côté des rebords 261, 262 tournés vers la gorge recevant le fil de bobine. Ces rainures 53 s'entendent sensiblement perpendiculairement à la paroi supérieure 241 et à la paroi inférieure 242. En l'occurrence, l'isolant 20 de bobine comporte deux rainures 53 ménagées dans le rebord arrière 262 et une rainure ménagée dans le rebord avant 261. Le vernis d'imprégnation permet d'avoir un bon contact entre les fils des bobines comme visible dans les figures 3d et 5c.

Comme cela est visible sur les figures 2b, 4b, 5a, 5b, l'isolant 20 comporte en outre des protubérances 56 définissant un passage 57 pour un pion 58 d'indexage du connecteur externe 22. Pour faciliter l'insertion des pions 58 d'indexage entre les protubérances 56, les protubérances 56 sont conformées d'une manière telle que le passage 57 présente une forme légèrement évasée à son extrémité débouchant du côté des extrémités 191, 192 du fil de la bobine 19 (cf. figure 5a).

Toutes les formes de l'isolant 20 de bobine précitées sont obtenues de préférence par moulage, l'isolant 20 étant avantageusement en matière plastique moulable.

Dans un exemple particulier de réalisation montré sur les figures 3b et 3c, le cadre 24 présente une longueur L1 de l'ordre de 53,6mm, une largeur L2 de l'ordre de 20,75 mm, et une profondeur L3 mesurée suivant une direction perpendiculaire à la feuille de l'ordre de 23,5 mm. Le talon 31 et l'ailette 32 présentent tous les deux une longueur L4 de l'ordre de 58,6 et une largeur L5, L6 respectivement de l'ordre de 10,2 mm pour le talon 31 et 29,2 mm pour l'ailette 32. Les rebords avant 261 et arrière 262 présentent une hauteur par rapport aux parois 241, 242 du cadre 24 de l'ordre de 9,7 mm. Dans cette réalisation les bordures longitudinales 282 du rebord arrière 262 sont de largeur différente. Plus précisément la bordure 282 associée à l'ailette 32 présente une largeur de 8 mm et celle associée au talon 31 présente une largeur de 7 mm. Le talon 31 présente une épaisseur de 0, 4 mm, tandis que l'ailette présente une épaisseur de 0, 8 mm et les bordures longitudinales 282, 281 et transversales 291, 292 une épaisseur de 1, 5 mm.

Comme visible sur la figure 3c, les portions 40 arrondies au niveau des angles du cadre 24 présentent un rayon R1 de courbure de l'ordre de 2mm, le centre C1 du cercle correspondant étant situé à une distance de l'ordre de 2mm de la paroi supérieure 241 ou inférieure 242 et à une distance de l'ordre de 2mm de la paroi latérale 243, 244 correspondante.

Les parois latérales 253, 254, supérieure 251 et inférieure 252 de l'élément 25 ont une épaisseur fine pour faciliter le transfert de chaleur entre la bobine 19 et la dent 14. Par exemple ces parois ont une épaisseur globalement égale ou inférieure à 0, 3 mm. L'épaisseur de ces parois et donc de l'élément souple 25 pourra être égale à 0, 24 mm. Les parois supérieure 241 et inférieure 242 ont une épaisseur de l'ordre de 1.5 mm. La hauteur des bras 30 est de l'ordre de 0.5mm. Le fil utilisé pour réaliser les bobines 19 présente par exemple un diamètre de l'ordre de 2mm. La profondeur des rainures borgnes 43 est de l'ordre de 0.5mm.

On décrit ci-après une opération de bobinage du stator 11 selon l'invention.

Dans un premier temps, des bandes de papier réalisées en "Nomex" sont pliées suivant quatre lignes de pliage pour obtenir la forme rectangulaire des éléments 25. Les éléments 25 sont insérés ensuite à l'intérieur des fentes 27 du corps 23 de sorte que les parois supérieure 251 et inférieure 252 de chaque élément 25 sont coincées entre les bras 30 et les faces internes des parois supérieure 241 et inférieure 242 du cadre 24. Les parois latérales 253 et 254 sont situées en face des fenêtres de manière à favoriser le transfert de chaleur entre les bobines et les dents 14 du stator. On notera que la paroi inférieure 252 est fendue comme visible à la figure 3b. Les bords de la paroi 252 délimitant la fente sont chacun introduit dans la fente du bras médian 30, qui est de largeur supérieure à la fente de la paroi 252.

Les isolants 20 de bobine ainsi obtenus sont positionnés autour d'un outil externe. Pour former les bobines, le fil est enroulé autour du cadre 24 et entre les rebords avant 261 et arrière 262 de sorte que les spires de la bobine 19 coopèrent avec les empreintes des portions arrondies 40. Le bobinage est effectué par exemple sur quatre couches d'enroulements superposées les unes sur les autres. Le bobinage est effectué de manière que les chignons des bobines 19 se situent contre les parois supérieure 241 et inférieure 242 du corps 24 et que les côtés des bobines 19 se situent contre les parois latérales de l'isolant 20 formée par les parois 253, 254 réalisées en Nomex.

Les extrémités 191, 192 du fil de chaque bobine 19 sont positionnées dans les guides fils managés dans les extrémités 33 des bordures longitudinales du rebord avant 261. Alternativement, si l'ailette 32 est issue du rebord avant 261, on replie l'ailette 32 de sorte que la zone 34 de pliage configurée à cet effet assure un guidage et un bon maintien du fil de sortie de la bobine.

Chaque isolant 20 de bobine est ensuite retiré de l'outil puis enfilé autour d'une dent 14 du stator 11 jusqu'à ce que les ergots 46 d'accrochage coopèrent avec les piquages 48 ménagés dans le stator et que les saillies 51 de l'isolant pénètrent à l'intérieur des fentes situées au pied de la dent 14.

Le talon 31 de chaque dent 14 est alors positionné de manière à être plaqué contre la périphérie interne de la culasse 17 s'étendant entre deux dents 14 successives. L'ailette 32 est rabattue vers le bobinage de manière à constituer un mur électriquement isolant entre deux bobines 19 adjacentes. La figure 2b montre ainsi des isolants de bobine dont l'ailette 3 qui est libre est maintenue repliée par un rebord avant 261 d'un isolant 20 adjacent. S'il y a lieu, en variante, l'ailette 32 pourra être maintenue en position rabattue au moyen d'un des systèmes d'encliquetage 36 précités.

On effectue ensuite une opération d'imprégnation du bobinage du stator 11 par un vernis d'imprégnation. A cette fin, le stator 11 est chauffé ainsi que le vernis pour être introduit à l'état liquide goutte à goutte dans les rainures borgne 43. Le côté fermé des rainures 43 correspondant à la surépaisseur 35 située de la périphérie externe du rotor permet d'éviter que le vernis s'écoule à l'intérieur de la machine. Le passage du vernis entre les faces internes de l'isolant 20 et les faces externes de la dent 14 permet de fixer efficacement l'isolant 20 de bobine sur la dent 14. On introduit également du vernis à l'intérieur des rainures 53 réalisées dans les bordures transversales des rebords 261, 262 de manière à imprégner et maintenir ensemble les fils des bobines 19. On notera que les rainures 43 des parois 241, 242 sont éloignées les unes des autres en fonction de l'épaisseur de la culasse 17. Ces rainures 43, non référencées à la figure 2b, ne sont pas masquées par la culasse 17.

En variante l'opération d'imprégnation pourra être réalisée par trempage partiel et roulage du stator dans un bain de vernis d'imprégnation. En variante l'opération d'imprégnation pourra être réalisée sous vide ou par trempage simple complet du stator dans un bain de vernis d'imprégnation.

On note que l'accrochage de l'isolant 20 sur la dent 14 via le système formé par les ergots 46 et les rainures 48 de piquage permet de garantir un positionnement précis de l'isolant 20 sur la dent 14 lors la phase d'imprégnation qui implique un déplacement du stator 11 afin de pouvoir positionner les différentes bobines 19 en face de l'outil applicateur de vernis d'imprégnation. Ensuite, le verni est refroidi en se polymérisant. Le vernis est par exemple à base de résine époxy, de résine polyester non saturée ou de résine silicone. Bien entendu, de manière connue, on peut ajouter aux résines des accélérateurs pour diminuer la durée de l'imprégnation

Une fois la phase d'imprégnation du bobinage du stator 11 terminée, le connecteur 22 externe est ensuite positionné au-dessus des bobines 19 pour assurer une connexion des bobines 19 entre elles suivant une configuration particulière comme cela est montré sur la figure 2b. Ce connecteur 22 est positionné de sorte que ses pieds 61 reposent sur un rebord de la culasse 17 et que ses pions 58 d'indexage s'insèrent entre les protubérances 56. Les extrémités 191, 192 des fils des bobines 19 sont ensuite soudées à des pattes 62 de soudage appartenant au connecteur 22 au moyen d'une électrode de soudage. Le connecteur 22 est ainsi maintenu en position contre le rebord d'extrémité de la culasse 17.

L'ensemble est ensuite positionné à l'intérieur d'un boîtier par frettage, ce boîtier pouvant par exemple être refroidi par eau.

Ainsi qu'il ressort de la description et des dessins l'isolant 20 selon l'invention est bi-matière et comporte un corps 23 rigide et un élément souple 25, tel qu'un papier, plus fin. L'élément 25 rapporté, moins épais et meilleur conducteur de chaleur que le corps 23, permet de bien évacuer la chaleur des bobines 19 par conduction via les dents 14. Cet élément souple 25 est d'un montage aisé grâce aux fentes 27. Les parois 241, 242 permettent un bon enroulement du fil de la bobine 19 sans risque de dommage. L'isolant 20 en deux parties 23, 25 est simple à fabriquer. On fera remarquer que les ailettes 32 constituent un mur électriquement isolant entre deux bobines 19 consécutives. En outre ces ailettes 32 sont issues de l'isolant 20, ici en matière plastique moulable, en sorte que la fabrication de l'isolant 20, avantageusement équipé d'un talon 31, est aisée. Le montage de l'isolant 20 sur sa dent associée 14 et le soudage des extrémités 191, 192 est également aisé grâce à la configuration de l'isolant 20 avantageusement configuré pour guider les extrémités 191, 192 de la bobine 19. Le vernis d'imprégnation permet une bonne fixation de la bobine sur sa dent 14 associée grâce aux rainures 43, qui sont borgnes pour éviter de polluer l'entrefer entre le stator et le rotor de la machine électrique. Cette fixation est facilitée grâce au système d'accrochage 45. Plus précisément la culasse 17 est dans cet exemple de réalisation de forme annulaire et constitue un support pour les dents 14 s'étendant vers l'intérieur en direction de l'axe X. Les dents 14 sont réparties circonférentiellement de manière régulière et de manière connue un entrefer existe entre les extrémités libres des dents 14 et la périphérie externe du rotor de la machine électrique tournante. Cet entrefer ne sera pas polluer par le vernis d'imprégnation. On notera que le système d'accrochage 45 facilite l'imprégnation et que les rainures 50 facilitent l'opération de soudage. Les talons 31 permettent d'augmenter la puissance de la machine électrique. Les ailettes 32 permettent d'augmenter également la puissance de la machine électrique tout en rendant celle-ci plus fiable et compacte. La machine électrique peut donc travailler à des températures plus élevées tout en étant plus puissante, fiable et compacte grâce aux ailettes 32, aux talons 31 et à l'isolant 20 en deux parties 23, 25.

Le rotor de la machine électrique pourra être un rotor à griffes comme dans le document FR 2 890 798. En variante le rotor pourra être à pôles saillants. En variante le rotor pourra être un rotor à aimants permanents comme dans les documents EP 0 803 962 et EP 0 831 580 précités. En variante le rotor à griffes ou à pôles saillants pourra comporter également des aimants permanents. En variante les dents 14 pourront ne pas être réparties circonférentiellement de manière régulière.
Il ressort également de la description et des dessins que les ailettes 32 et les talons 31 sont moins épais que les bordures 281, 282, 291, 292 des rebords 261, 262, le talon 31 étant d'épaisseur moindre que l'ailette 32. On notera que le connecteur 22 comporte un corps de forme annulaire en matière électriquement isolante, ici doté de pieds 61, dans lequel sont noyé des pistes électriquement conductrices en forme d'anneau, par exemple en cuivre. Chaque piste du connecteur 22 est dotée de pattes 62 de soudage pour être soudée aux extrémités 191, 192 des bobines 19. Dans ce mode de réalisation les pistes sont empilées les unes sur les autres et il est prévu quatre pistes, l'une des pistes constituant le point neutre d'un montage en étoile des phases de la machine électrique tournante ici du type triphasé. On notera que la piste constituant le point neutre comporte un nombre de pattes 62 égal au nombre de bobines 19 et supérieur au nombre de pattes 62 des autres pistes isolées les unes des autres par la matière électriquement isolante, telle que de la matière plastique, du corps du connecteur 22, les pattes 62 de soudage étant apparentes. Bien entendu le nombre de pistes dépend des applications, cinq pistes où six pistes pourront être prévues pour une machine électrique respectivement à quatre ou cinq phases. On notera que la localisation des extrémités 191, 192 permet d'allonger la longueur des pattes de soudage 62 ce qui facilite le passage des électrodes de soudage.

L'homme du métier pourra bien entendu modifier la configuration de l'isolant 20 de bobine ainsi que son application sans sortir du cadre de l'invention. Ainsi, l'invention s'applique ici à un stator 11 mais pourrait également s'appliquer à un rotor d'une machine électrique tournante. En effet, tout comme le stator 11, le rotor comporte une culasse et des dents issues de la culasse. Dans le cas du stator 11, la culasse 17 constitue la périphérie externe du corps du stator. Dans le cas du rotor, la culasse constitue la périphérie interne du corps du rotor. Dans les deux cas, l'isolant 20 de bobine peut être positionné autour d'une dent du rotor ou du stator.

En variante, l'isolant de bobine 20 comporte également des fenêtres réalisées dans les faces supérieure 241 et inférieure 242 du cadre.

En variante, l'isolant 20 de bobine comporte également d'autres ailettes issues d'au moins une des bordures transversales des rebords 261, 262 afin de couvrir les chignons des bobines 19 portés par les parois supérieure 241 et inférieure 242. Bien entendu l'isolant 20 pourra être dépourvu en variante d'ailette 32 et/ou de talon 31.

On note que les termes "inférieur" et "supérieur" sont entendus par rapport à un isolant 20 de bobine reposant sur un support plat, les parois latérales 243, 244 étant perpendiculaires au support. La paroi inférieure 242 est la paroi la plus proche du support tandis que la paroi supérieure 241 est la paroi la plus éloignée du support, comme cela est représenté sur les figures 3a et 3b notamment. Les faces "internes" des parois 241, 242 sont tournées vers l'intérieur du cadre 24; tandis que les faces "externes" des parois 241, 242 sont tournées vers l'extérieur du cadre 24.

## Revendications

1. Isolant (20) de bobine destiné à être positionné autour d'une dent (14) d'un stator ou d'un rotor d'une machine électrique, l'isolant est formé par :
- un corps (23) comportant un cadre (24) en matériau rigide ayant deux fenêtres latérales (243, 244), **caractérisé par**
- un élément (25) rapporté réalisé en matériau souple moins épais et meilleur conducteur de chaleur que le matériau du corps (23), cet élément (25) en matériau souple ayant deux parois latérales (253, 254) destinées à être positionnées en regard des fenêtres latérales (243, 244) du cadre (24), une paroi supérieure (251) et une paroi inférieure (252),
- le corps (23) comportant des fentes (27) pour l'insertion de l'élément (25) en matériau souple
et en ce que l'isolant comporte sur au moins une face interne d'une paroi (241, 242) du cadre (24) des bras (30) reliés à leur base par une surépaisseur (35) ancrée sur le cadre, ces bras (30) étant en surélévation par rapport à la face interne de la paroi (241, 242) du cadre (24) de manière à former les fentes (27) d'insertion de l'élément (25) en matériau souple, les parois (251, 252) de l'élément (25) étant agencées à l'intérieur des fentes (27) de manière à être maintenues coincées entre les bras (30) et lesdites faces internes des parois (241, 242) du cadre (24).

2. Isolant selon la revendication 1, **caractérisé en ce que** le corps (23) comporte en outre un rebord avant (261) et un rebord arrière (262) définissant une gorge de montage pour l'enroulement d'une bobine.

3. Isolant de bobine selon la revendication 1, **caractérisé en ce que** la surépaisseur (35) reliant les bras (30) entre eux est implantée du côté intérieur de la machine électrique.

4. Isolant de bobine selon l'une des revendications 1 à 3, **caractérisé en ce qu'**il comporte en outre un système d'accrochage (45) de l'isolant (20) de bobine sur la dent (14) du stator ou du rotor.

5. Isolant de bobine selon les revendications 2 et 4, **caractérisé en ce que** le système d'accrochage (45) est formé par au moins un ergot (46) d'accrochage issu d'une arête d'un rebord (261, 262) et au moins une rainure (48) de faible profondeur, appelée "piquage", ménagée sur une face latérale de la dent (14) pour un encliquetage de l'ergot (46) d'accrochage.

6. Isolant de bobine selon la revendication 5, **caractérisé en ce qu'**il comporte deux ensembles de deux ergots (46) d'accrochage et deux rainures (48) réalisées du côté d'une extrémité libre de la dent destinées à recevoir chacune deux ergots (46) d'accrochage d'un ensemble.

7. Isolant de bobine selon la revendication 2 et l'une des revendications 1 à 6, **caractérisé en ce qu'**il comporte en outre des rainures (53) ménagées dans au moins un des rebords (261, 262) du côté de la gorge pour le passage du vernis d'imprégnation au niveau de la bobine (19).

8. Isolant de bobine selon la revendication 7, **caractérisé en ce qu'**il comporte deux rainures (53) ménagées dans un des rebords (261, 262) du côté de la gorge et une autre rainure ménagée dans l'autre rebord.

9. Isolant de bobine selon la revendication 2 et l'une des revendications 1 à 8, **caractérisé en ce qu'**il comporte au moins une ailette (32) pliable par rapport au corps (23) apte à assurer une isolation électrique entre deux bobines (19) montées sur deux dents (14) adjacentes, cette ailette (32) étant située dans le prolongement d'un des rebords (261, 262).

10. Isolant de bobine selon la revendication 2 et l'une des revendications 1 à 9, **caractérisé en ce qu'**il comporte en outre un talon (31) situé dans le prolongement du rebord arrière (262) destiné à être plaqué contre un fond d'une encoche (15) du stator ou du rotor.

11. Isolant de bobine selon l'une des revendications 1 à 9, **caractérisé en ce qu'**il comporte des empreintes ménagées dans des portions (40) de forme arrondie au niveau des angles du cadre (24) pour faciliter un enroulement d'un fil de la bobine (19).

12. Isolant de bobine selon l'une des revendications 1 à 11, **caractérisé en ce qu'**il comporte des protubérances (56) définissant un passage pour un pion d'indexage (58) d'un connecteur externe (22).

13. Stator ou rotor de machine électrique comportant des dents (14) issues d'une culasse (17) autour desquelles est positionné un isolant (20) de bobine selon l'une des revendications précédentes portant une bobine (19).

## Patentansprüche

1. Spulenisolierung (20), die dazu bestimmt ist, um einen Zahn (14) eines Stators oder eines Rotors einer elektrischen Maschine positioniert zu werden,
wobei die Isolierung durch Folgendes gebildet wird:
- einen Körper (23), der einen Rahmen (24) aus starrem Material, der zwei Seitenfenster (243, 244) aufweist, umfasst, **gekennzeichnet durch**
- ein Einsatzelement (25), das aus einem flexiblen Material hergestellt ist, das weniger dick und ein besserer Wärmeleiter als das Material des Körpers (23) ist, wobei dieses Element (25) aus flexiblem Material zwei Seitenwände (253, 254), die dazu bestimmt sind, gegenüber den Seitenfenstern (243, 244) des Rahmens (24) positioniert zu werden, eine obere Wand (251) und eine untere Wand (252) aufweist,
- wobei der Körper (23) Spalte (27) für das Einschieben des Elements (25) aus flexiblem Material umfasst,
und **dadurch, dass** die Isolierung auf mindestens einer Innenfläche einer Wand (241, 242) des Rahmens (24) Arme (30) umfasst, die an ihrer Basis durch eine Verdickung (35), die am Rahmen verankert ist, verbunden sind, wobei diese Arme (30) in Bezug auf die Innenfläche der Wand (241, 242) des Rahmens (24) abgehoben sind, sodass sie die Einschubspalte (27) für das Element (25) aus flexiblem Material bilden, wobei die Wände (251, 252) des Elements (25) im Inneren der Spalte (27) angeordnet sind, um zwischen den Armen (30) und den Innenflächen der Wände (241, 242) des Rahmens (24) eingeklemmt gehalten zu werden.

2. Isolierung nach Anspruch 1, **dadurch gekennzeichnet, dass** der Körper (23) ferner eine vordere Einfassung (261) und eine hintere Einfassung (262) umfasst, die eine Einbauauskehlung für die Wicklung einer Spule definieren.

3. Spulenisolierung nach Anspruch 1, **dadurch gekennzeichnet, dass** die Verdickung (35), die die Arme (30) untereinander verbindet, auf der Innenseite der elektrischen Maschine eingerichtet ist.

4. Spulenisolierung nach einem der Ansprüche 1 bis 3, **dadurch gekennzeichnet, dass** sie ferner ein System zur Befestigung (45) der Spulenisolierung (20) an dem Zahn (14) des Stators oder des Rotors umfasst.

5. Spulenisolierung nach den Ansprüchen 2 und 4, **dadurch gekennzeichnet, dass** das Befestigungssystem (45) durch mindestens eine Befestigungsnase (46), die aus einer Kante einer Einfassung (261, 262) hervorgeht, und mindestens eine Nut (48) geringer Tiefe, die "Abzweigung" genannt wird und die auf einer Seitenfläche des Zahns (14) bereitgestellt ist, um die Befestigungsnase (46) einschnappen zu lassen, gebildet wird.

6. Spulenisolierung nach Anspruch 5, **dadurch gekennzeichnet, dass** sie Folgendes umfasst: zwei Sätze von zwei Befestigungsnasen (46) und zwei Nuten (48), die auf der Seite eines freien Endes des Zahns hergestellt sind und dazu bestimmt sind, jeweils zwei Befestigungsnasen (46) eines Satzes aufzunehmen.

7. Spulenisolierung nach Anspruch 2 und einem der Ansprüche 1 bis 6, **dadurch gekennzeichnet, dass** sie ferner Nuten (53) umfasst, die für den Durchgang des Imprägnierlacks im Bereich der Spule (19) in mindestens einer der Einfassungen (261, 262) auf der Seite der Auskehlung bereitgestellt sind.

8. Spulenisolierung nach Anspruch 7, **dadurch gekennzeichnet, dass** sie zwei Nuten (53), die in einer der Einfassungen (261, 262) auf der Seite der Auskehlung bereitgestellt sind, und eine andere Nut, die in der anderen Einfassung bereitgestellt ist, umfasst.

9. Spulenisolierung nach Anspruch 2 und einem der Ansprüche 1 bis 8, **dadurch gekennzeichnet, dass** sie mindestens einen Flügel (32) umfasst, der mit Bezug auf den Körper (23) klappbar ist und fähig ist, eine elektrische Isolierung zwischen zwei Spulen (19), die auf zwei benachbarten Zähnen (14) montiert sind, sicherzustellen, wobei dieser Flügel (32) in der Verlängerung einer der Einfassungen (261, 262) liegt.

10. Spulenisolierung nach Anspruch 2 und einem der Ansprüche 1 bis 9, **dadurch gekennzeichnet, dass** sie ferner einen Absatz (31) umfasst, der in der Verlängerung der hinteren Einfassung (262) liegt und dazu bestimmt ist, gegen einen Boden einer Einkerbung (15) des Stators oder des Rotors gedrückt zu werden.

11. Spulenisolierung nach einem der Ansprüche 1 bis 9, **dadurch gekennzeichnet, dass** sie Vertiefungen umfasst, die in abgerundeten Abschnitten (40) im Bereich der Ecken des Rahmens (24) bereitgestellt sind, um ein Aufwickeln eines Drahts der Spule (19) zu erleichtern.

12. Spulenisolierung nach einem der Ansprüche 1 bis 11, **dadurch gekennzeichnet, dass** sie Vorsprünge (56) umfasst, die einen Durchgang für einen Indexierungsstift (58) eines externen Verbinders (22) definieren.

13. Stator oder Rotor einer elektrischen Maschine, der aus einem Joch (17) hervorgehende Zähne (14) umfasst, um die eine Spulenisolierung (20) nach einem der vorhergehenden Ansprüche, die eine Spule (19) trägt, positioniert ist.

## Claims

1. Coil insulator (20) intended to be positioned around a tooth (14) of a stator or of a rotor of an electric machine,
the insulator being formed by:
- a body (23) comprising a frame (24) made of rigid material having two lateral windows (243, 244), **characterized by**
- an add-on element (25) produced in a material that is flexible but less thick and a better heat conductor than the material of the body (23), this element (25) made of flexible material having two lateral walls (253, 254) intended to be positioned facing the lateral windows (243, 244) of the frame (24), a top wall (251) and a bottom wall (252),
- the body (23) comprising slits (27) for the insertion of the element (25) made of flexible material
and in that the insulator comprises, on at least one inner face of a wall (241, 242) of the frame (24), arms (30) linked at their base by an overthickness (35) anchored to the frame, these arms (30) being raised relative to the inner face of the wall (241, 242) of the frame (24) so as to form the slits (27) for insertion of the element (25) made of flexible material, the walls (251, 252) of the element (25) being arranged in the slits (27) so as to be held pinched between the arms (30) and said inner faces of the walls (241, 242) of the frame (24).

2. Insulator according to Claim 1, **characterized in that** the body (23) further comprises a front flange (261) and a rear flange (262) defining a mounting channel for winding a coil.

3. Coil insulator according to Claim 1, **characterized in that** the overthickness (35) linking the arms (30) to one another is located on the internal side of the electric machine.

4. Coil insulator according to one of Claims 1 to 3, **characterized in that** it further comprises a system (45) for attaching the coil insulator (20) to the tooth (14) of the stator or of the rotor.

5. Coil insulator according to Claims 2 and 4, **characterized in that** the attachment system (45) is formed by at least one attachment lug (46) derived from an edge of a flange (261, 262) and at least one shallow groove (48), called "stitching", formed on a lateral face of the tooth (14) for a snap-fitting of the attachment lug (46).

6. Coil insulator according to Claim 5, **characterized in that** it comprises two sets of two attachment lugs (46) and two grooves (48) produced on the side of a free end of the tooth intended to receive each of the two attachment lugs (46) of a set.

7. Coil insulator according to Claim 2 and one of Claims 1 to 6, **characterized in that** it further comprises grooves (53) formed in at least one of the flanges (261, 262) on the side of the groove for the passage of the impregnating lacquer on the coil (19).

8. Coil insulator according to Claim 7, **characterized in that** it comprises two grooves (53) formed in one of the flanges (261, 262) on the side of the channel and another groove formed in the other flange.

9. Coil insulator according to Claim 2 and one of Claims 1 to 8, **characterized in that** it comprises at least one fin (32) that can be folded relative to the body (23) capable of ensuring an electrical insulation between two coils (19) mounted on two adjacent teeth (14), this fin (32) being situated in the extension of one of the flanges (261, 262).

10. Coil insulator according to Claim 2 and one of Claims 1 to 9, **characterized in that** it further comprises a heel (31) situated in the extension of the rear flange (262) intended to be pressed against a bottom of a notch (15) of the stator or of the rotor.

11. Coil insulator according to one of Claims 1 to 9, **characterized in that** it comprises indentations formed in portions (40) of rounded form at the corners of the frame (24) to facilitate a winding of a wire of the coil (19).

12. Coil insulator according to one of Claims 1 to 11, **characterized in that** it comprises protuberances (56) defining a passage for an indexing pin (58) of an external connector (22).

13. Electric machine stator or rotor comprising teeth (14) derived from a yoke (17) around which there is positioned a coil insulator (20) according to one of the preceding claims bearing a coil (19).
